# EUROPÄISCHE PATENTSCHRIFT

(11) **EP 2 130 705 B1**
(45) Veröffentlichungstag und Bekanntmachung des Hinweises auf die Patenterteilung: **17.11.2010**
(21) Anmeldenummer: 08010327.8
(22) Anmeldetag: 06.06.2008
(51) Int. Cl.: B60J 7/02

(54) **Schiebebügelverdeck**
Push rail cover
Bâche à arceaux coulissants

(43) Veröffentlichungstag der Anmeldung: 09.12.2009
(73) Patentinhaber: VBG GROUP TRUCK EQUIPMENT GmbH, 47807 Krefeld (DE)
(72) Erfinder: Wensing, Udo, 46145 Oberhausen (DE); Hahnen, Hans Boris, 47475 Kamp-Lintfort (DE); Neumeyer, Frank, 47877 Willich (DE); Frentzen, Frank, 41749 Viersen (DE); Birkenbach, Rolf, 47809 Krefeld (DE); Kemmerling, Karl, 42719 Solingen (DE); Scholz, Axel, 47447 Moers (DE); Lauterbach, Tim, 41066 Mönchengladbach (DE); Weigelt, Rolf, 47228 Duisburg (DE)
(74) Vertreter: DR. STARK & PARTNER

(56) Entgegenhaltungen:
- EP-A- 1 775 160
- CA-A1- 2 515 656
- DE-A1- 19 839 820
- FR-A- 2 801 042
- GB-A- 2 157 246
- US-A- 5 524 953
- US-A- 5 538 313
- US-B1- 6 183 036

## Beschreibung

Die Erfindung betrifft ein Schiebebügelverdeck für LKW oder LKW-Anhänger, mit mehreren auf der Ladefläche des LKW oder LKW-Anhängers entlang der Längsseiten der Ladefläche verlaufenden Lauf- und Führungsschienen, in denen Rollenwagen mit daran angeordneten portalartig ausgebildeten Haltebügeln verschieblich geführt sind, sowie mit einer an den Haltebügeln angebrachten Verdeckplane.

Aus der Praxis sind derartige Schiebebügelverdecke bekannt, die zumeist einen Aufbau wie in der DE 198 39 820 A1 beschrieben aufweisen.

Im Betrieb sind sowohl beladene als auch unbeladene Betriebzustände gegeben, wobei es aufgrund unterschiedlich starker Durchbiegung der Ladefläche dazu kommt, dass die Oberseite der Plane nicht ausreichend straff gespannt ist und somit zumindest in Teilbereichen mehr oder weniger stark durchhängt. Hierdurch kommt es während der Fahrt durch Flattern oder dergleichen zu Beeinträchtigungen, wie z. B. Geräuschbelästigungen, und es kann sich Feuchtigkeit auf der Plane sammeln, die dann beseitigt werden muss oder aber zu unpassenden Zeitpunkten herabstürzen kann. Noch kritischer ist es, wenn im Winter diese angesammelte Feuchtigkeit gefriert und somit in Form von Eis zu Boden stürzt.

Aufgabe der Erfindung ist es, die vorgenannten Nachteile zu vermeiden und ein Schiebebügelverdeck anzugeben, mit dem eine Straffung der Plane im oberen Bereich möglich ist.

Diese Aufgabe wird dadurch gelöst, dass zumindest einer der Haltebügel, insbesondere ein nicht verschieblich ausgebildeter und/oder an einem Ende der Ladefläche vorgesehener Haltebügel, in seinem unteren Bereich um eine Schwenkachse verkippbar ausgebildet ist. Hierdurch erfolgt eine horizontale Verlagerung des oberen Bereichs dieses Haltebügels, so dass eine Straffung der Oberseite der Plane bewirkbar ist, wobei der untere Bereich der Plane, d h. der untere Bereich der Seitenwände, nicht oder zumindest kaum beeinflusst wird. Dabei weist der mit einer Schwenkachse versehene Haltebügel eine Einrichtung zur Erzielung einer Auslenkkraft auf, welche ein Verschwenken des Haltebügels, insbesondere in die zu der Erstreckung der Plane entgegengesetzt weisenden Richtung, bewirkt, so dass die Verschwenkung zumindest in einer Schwenkrichtung nicht manuell oder mittels eines Hilfsmittels oder Werkzeugs erfolgen muss.

Vorteilhafterweise kann bei zumindest einem der verschieblich ausgebildeten Haltebügeln der Rollenwagen in den Lauf- und Führungsschienen in zumindest einer Position festlegbar, insbesondere festklemmbar oder verriegelbar, ausgebildet sein, so dass feste Anordnung z. B. an einem oder auch beiden der jeweiligen Enden der Ladefläche erfolgen kann und die im Fahrbetrieb dort vorgesehenen Haltebügel für Be- und/oder Entladevorgänge von dieser Position weg bewegbar sind.

Erfindungsgemäß kann bei zumindest einem der verschieblich ausgebildeten Haltebügeln der Rollenwagen in den Lauf- und Führungsschienen ein Spiel haben und somit in geringem Maße ein Verkippen ermöglichen, so dass durch Verkippen des Haltebügels ebenfalls eine horizontale Verlagerung des oberen Bereiches möglich ist und somit eine Bewegung der Plane "mitgemacht" werden kann.

Auch kann die Befestigung der Plane an den Haltebügeln hierfür ein Spiel, insbesondere von ca. 1 cm oder wenigen cm, aufweisen.

Dabei kann die Einrichtung zur Erzielung einer Auslenkkraft als ein insbesondere eine Druckkraft ausübendes Federelement, wie z. B. eine Druckfeder, ausgebildet sein, so dass eine Auslenkung ohne eine zusätzliche Energiequelle, wie dies beispielsweise bei elektrischer oder pneumatischer bzw. hydraulischer Betätigung wäre, möglich ist.

Auch kann die Einrichtung zur Erzielung einer Auslenkkraft als ein insbesondere manuell betätigbares Verlagerungselement wie z. B. ein Exzenter, ausgebildet sein, so dass eine einfache und werkzeuglose Betätigung möglich ist.

Ferner kann eine Einrichtung zur Arretierung der Position des Haltebügels, wie z. B. einige Rasten, vorgesehen sein, so dass auch eine einstellbare Straffung im oberen Bereich der Plane bewirkbar ist und insbesondere eine Möglichkeit zur Verringerung der Spannung für das Verschieben des am LKW-Heck oder am Ende des LKW-Anhängers befindlichen Haltebügels gegeben ist.

Vorteilhafterweise kann zumindest ein Haltebügel im oberen Bereich an wenigstens einer Seite mit einem insbesondere gelenkig angeschlagenen und an den Haltebügel heranklappbaren, portalartig ausgebildeten Hilfsbügel versehen sein, dessen Länge so ausgebildet ist, dass seine obere Querstrebe in ausgeklapptem Zustand zumindest in etwa auf gleicher Höhe liegt wie die Querstrebe des Haltebügels, an dem er angeordnet ist, so dass eine bessere Abstützung der Plane an mehreren Punkten gegeben ist.

Im Folgenden wird ein in der Zeichnung dargestelltes Ausführungsbeispiel der Erfindung erläutert. Es zeigen:
- Fig. 1: zeigt einen an einer LKW-Zugmaschine ange- brachtem LKW-Anhänger mit einem erfindungs- gemäßen Schiebebügelverdeck, und

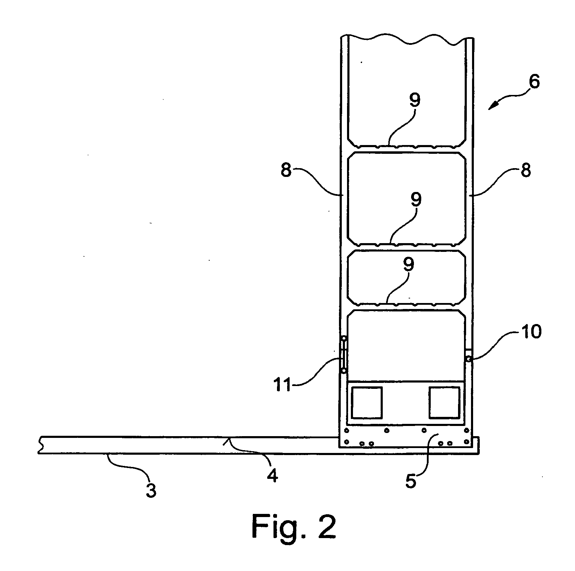

- Fig. 2: zeigt das Detail "X" des Gegenstandes nach Fig. 1.

In allen Figuren werden für gleiche bzw. gleichartige Bauteile übereinstimmende Bezugszeichen verwendet.

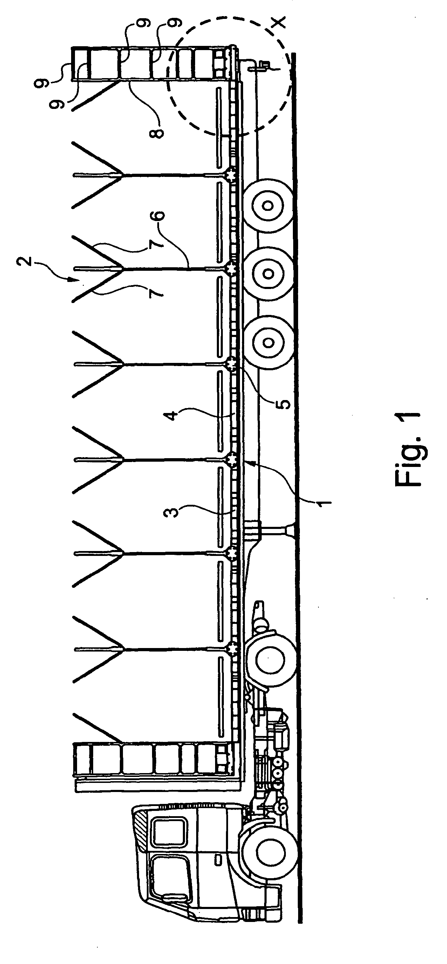

Fig. 1 zeigt einen LKW-Anhänger 1 mit einem Schiebebügelverdeck 2 mit mehreren auf der Ladefläche 3 des LKW-Anhängers 1 entlang der Längsseiten der Ladefläche 3 verlaufenden Lauf- und Führungsschienen 4. In den Lauf- und Führungsschienen 4 sind Rollenwagen 5 mit daran angeordneten, portalartig ausgebildeten Haltebügeln 6 verschieblich geführt, wobei die Haltebügel 6 im oberen Bereich an beiden Seiten jeweils mit einem gelenkig angeschlagenen, portalartig ausgebildeten Hilfsbügel 7 versehen sind, die an den jeweiligen Haltebügel 6 heranklappbar sind. Die Halte- und Hilfsbügel 6, 7 überspannen somit die Breite der Ladefläche 3 und sind mittels ihrer Rollenwagen 5 in den Lauf- und Führungsschienen 4 verschieblich angeordnet.

Die Länge der Hilfsbügel 7 ist dabei so ausgebildet, dass deren obere Querstrebe 7a in ausgeklapptem Zustand zumindest in etwa auf gleicher Höhe liegt wie die Querstrebe 6a desjenigen Haltebügels 6, an dem der Hilfsbügel 7 angeordnet ist

Das Schiebebügelverdeck 2 umfasst weiterhin eine an den Haltebügeln 6 sowie den Hilfsbügeln 7 in üblicher Weise angebrachte Verdeckplane, die in der Zeichnung aus Gründen der besseren Übersicht nicht dargestellt ist.

Die jeweils an dem vorderen bzw. hinteren Ende der Ladefläche 3 vorgesehenen Haltebügel 6 sind vorliegend als Endbügel ausgebildet, welche in der Seitenansicht einen leiterähnlichen Aufbau mit zwei in den Lauf- und Führungsschienen 4 voneinander beabstandet angeordneten und senkrecht verlaufenden Vertikalstreben 8 und einer Vielzahl diese Vertikalstreben 8 waagerecht miteinander verbindenden Horizontalstreben 9 haben.

Um ein gezieltes Spannen der Plane im Wesentlichen an ihrer Oberseite zu ermöglichen, ist der am Ende des LKW-Anhängers 1 vorgesehene Endbügel in seinem unteren Bereich um eine Schwenkachse 10 verkippbar ausgebildet.

Der Rollenwagen 5 dieses Endbügels ist dabei in den Lauf- und Führungsschienen in zumindest dieser Endposition festlegbar, insbesondere festklemmbar oder verriegelbar, ausgebildet.

Weiterhin weist dieser Endbügel eine Einrichtung 11 zur Erzielung einer Auslenkkraft auf, die ein Verschwenken des Haltebügels in die zu der Erstreckung der Plane entgegengesetzt weisenden Richtung, d. h. von der Zugmaschine weg zum Ende des LKW-Anhängers, um die Schwenkachse 10 bewirkt.

Dabei ist die Einrichtung 11 zur Erzielung einer Auslenkkraft als ein eine Druckkraft ausübendes Federelement wie z. B. eine Druckfeder ausgebildet und es ist eine Einrichtung 12 zur Arretierung der verschwenkten Position des Haltebügels vorgesehen.

## Patentansprüche

1. Schiebebügelverdeck (2) für LKW oder LKW-Anhänger (1), mit mehreren auf der Ladefläche (3) des LKW entlang der Längsseiten der Ladefläche verlaufenden Lauf- und Führungsschienen (4), in denen Rollenwagen (5) mit daran angeordneten portalartig ausgebildeten Haltebügeln (6) verschieblich geführt sind, sowie mit einer an den Haltebügeln (6) angebrachten Verdeckplane, **dadurch gekennzeichnet, dass** zumindest einer der Haltebügel (6), insbesondere ein nicht verschieblich ausgebildeter und an einem Ende der Ladefläche (3) vorgesehener Haltebügel (6), in seinem unteren Bereich um eine Schwenkachse (10) verkippbar ausgebildet ist, wobei der mit einer Schwenkachse (10) versehene Baltebügel (6) eine Einrichtung (11) zur Erzielung einer Auslenkkraft aufweist, welche ein Verschwenken des Haltebügels (6), insbesondere in die zu der Erstreckung der Plane entgegengesetzt weisenden Richtung, bewirkt.

2. Schiebebügelverdeck (2) nach dem vorhergehenden Anspruch, **dadurch gekennzeichnet, dass** bei zumindest einem der verschieblich ausgebildeten Haltebügeln (6) der Rollenwagen (5) in den Führungsschienen (4) ein Spiel hat und somit in geringem Maße ein Verkippen ermöglicht.

3. Schiebebügelverdeck (2) nach dem vorhergehenden Anspruch, **dadurch gekennzeichnet, dass** bei zumindest einem der verschieblich ausgebildeten Haltebügeln (6) der Rollenwagen (5) in den Lauf- und Führungsschienen (4) in zumindest einer Position festlegbar, insbesondere festklemmbar oder verriegelbar, ausgebildet ist.

4. Schiebebügelverdeck (2) nach einem der vorhergehenden Ansprüche, **dadurch gekennzeichnet, dass** die Befestigung der Plane an den Haltebügeln (6) ein Spiel, insbesondere von ca. 1 cm oder wenigen cm, aufweist.

5. Schiebebügelverdeck (2) nach **einem der** vorhergehenden Ansprüche **dadurch gekennzeichnet, dass** die Einrichtung (11) zur Erzielung einer Auslenkkraft als ein insbesondere eine Druckkraft ausübendes Federelement wie z. B. eine Druckfeder ausgebildet ist.

6. Schiebebügelverdeck (2) einem der vorhergehenden Ansprüche, **dadurch gekennzeichnet, dass** die Einrichtung (11) zur Erzielung einer Auslenkkraft als ein insbesondere manuell betätigbares Verlagerungselement wie z. B. ein Exzenter ausgebildet ist.

7. Schiebebügelverdeck (2) nach einem der vorhergehenden Ansprüche, **dadurch gekennzeichnet, dass** eine Einrichtung zur Arretierung der Position des Haltebügels (6), wie z. B. einige Rasten, vorgesehen ist.

8. Schiebebügelverdeck (2) nach einem der vorhergehenden Ansprüche, **dadurch gekennzeichnet, dass** zumindest ein Haltebügel (6) im oberen Bereich an wenigstens einer Seite mit einem insbesondere gelenkig angeschlagenen und an den Haltebügel (6) heranklappbaren und portalartig ausgebildeten Hilfsbügel (7) versehen ist, dessen Länge so ausgebildet ist, dass seine obere Querstrebe in ausgeklapptem Zustand zumindest in etwa auf gleicher Höhe liegt wie die Querstrebe des Haltebügels (6), an dem er angeordnet ist.

## Claims

1. Sliding bow roof (2) for HGVs or HGV trailers (1), with multiple running or guide rails (4) on a loading surface (3) of the HGV along the longitudinal sides of the loading surface, in which rollers (5) with portal-like retaining brackets (6) arranged thereon are displaceably guided, and with a canopy attached to the retaining brackets (6), **characterised in that** at least one of the retaining brackets (6), in particular a retaining bracket (6) designed to be non-displaceable and provided at one end of the loading surface (3) is designed to be tiltable in its lower area about a pivoting axis (10), whereby the retaining bracket (6) provided with a pivoting axis (10) has a device (11) for attaining a deflecting force, which effects a pivoting of the retaining bracket (6), in particular in the direction opposite the extension of the tarpaulin.

2. Sliding bow roof (2) according to the preceding claim, **characterised in that**, for at least one of the displaceably designed retaining brackets (6), the roller (5) has some play in the guide rails (4) and thus enables tilting to a slight extent.

3. Sliding bow roof (2) according to the preceding claim, **characterised in that**, for at least one of the displaceably designed retaining brackets (6) the roller (5) is designed to be fixable in the running or guide rails (4) in at least one position, in particular can be clamped fast or bolted.

4. Sliding bow roof (2) according to one of the preceding claims, **characterised in that** the fastening of the tarpaulin onto the retaining brackets (6) has some play, in particular of approx. 1 cm or a few cm.

5. Sliding bow roof (2) according to one of the preceding claims, **characterised in that** the device (11) for attaining a deflecting force is designed in particular as a spring element exerting a pressure force, such as e.g. a pressure spring.

6. Sliding bow roof (2) according to one of the preceding claims, **characterised in that** the device (11) for attaining a deflecting force is designed in particular as a manually actuated displacement element such as e.g. an eccentric.

7. Sliding bow roof (2) according to one of the preceding claims, **characterised in that** a device for locking the position of the retaining bracket (6), such as e.g. several latches, is provided.

8. Sliding bow roof (2) according to one of the preceding claims **characterised in that** at least one retaining bracket (6) in the upper area, on at least one side, is provided with an auxiliary bracket (7), in particular which is mounted in an articulated manner and which can be folded onto the retaining bracket (6) and is designed in the form of a portal, the length of which is designed such that its upper cross strut in the folded-out condition lies at least roughly at the same height as the cross strut of the retaining bracket (6) on which it is arranged.

## Revendications

1. Bâche (2) à arceaux coulissants, destinée à des camions ou à des remorques (1) de camions et comprenant plusieurs glissières (4) de mouvement et de guidage qui s'étendent sur la surface de chargement (3) du camion, le long des côtés longitudinaux de ladite surface de chargement, et dans lesquelles sont guidés, à coulissement, des chariots à rouleaux (5) sur lesquels se trouvent des arceaux de maintien (6) de réalisation du type portique ; ainsi qu'une toile de bâchage implantée sur lesdits arceaux de maintien (6), **caractérisée par le fait qu'**au moins l'un des arceaux de maintien (6), en particulier un arceau de maintien (6) de réalisation non coulissante, prévu à une extrémité de la surface de chargement (3), est conçu avec faculté de basculement autour d'un axe de pivotement (10) dans sa région inférieure, sachant que l'arceau de maintien (6) pourvu d'un axe de pivotement (10) présente un dispositif (11) de génération d'une force d'excursion pivotante qui provoque un pivotement dudit arceau de maintien (6), notamment dans la direction pointant en sens inverse de l'étendue de la toile de bâchage.

2. Bâche (2) à arceaux coulissants, selon la revendication précédente, **caractérisée par le fait que**, pour au moins l'un des arceaux de maintien (6) de réalisation coulissante, le chariot à rouleaux (5) présente un jeu dans les glissières de guidage (4) et autorise, de la sorte, un basculement d'ampleur modeste.

3. Bâche (2) à arceaux coulissants, selon la revendication précédente, **caractérisée par le fait que**, pour au moins l'un des arceaux de maintien (6) de réalisation coulissante, le chariot à rouleaux (5) est conçu de manière à pouvoir être consigné à demeure, notamment coincé rigidement ou verrouillé, dans les glissières (4) de mouvement et de guidage, en au moins un emplacement.

4. Bâche (2) à arceaux coulissants, selon l'une des revendications précédentes, **caractérisée par le fait que** la fixation de la toile de bâchage aux arceaux de maintien (6) présente un jeu, notamment d'environ 1 cm ou d'un faible nombre de cm.

5. Bâche (2) à arceaux coulissants, selon l'une des revendications précédentes, **caractérisée par le fait que** le dispositif (11) de génération d'une force d'excursion pivotante est réalisé sous la forme d'un élément élastique développant notamment une force de pression et se présentant, par exemple, comme un ressort de pression.

6. Bâche (2) à arceaux coulissants, selon l'une des revendications précédentes, **caractérisée par le fait que** le dispositif (11) de génération d'une force d'excursion pivotante est réalisé sous la forme d'un élément de déplacement notamment actionnable à la main et se présentant, par exemple, comme un excentrique.

7. Bâche (2) à arceaux coulissants, selon l'une des revendications précédentes, **caractérisée par le fait qu'**un dispositif, revêtant par exemple la forme de quelques crans d'arrêt, est prévu pour la consignation à demeure de l'emplacement de l'arceau de maintien (6).

8. Bâche (2) à arceaux coulissants, selon l'une des revendications précédentes, **caractérisée par le fait qu'**au moins un arceau de maintien (6) est muni dans la région supérieure, sur au moins un côté, d'un arceau auxiliaire (7) de réalisation du type portique qui est notamment rattaché de manière articulée, peut être replié par pivotement sur ledit arceau de maintien (6), et dont la longueur est conçue de telle sorte que son jambage transversal supérieur soit situé, à l'état déployé par pivotement, au moins sensiblement à la même hauteur que le jambage transversal dudit arceau de maintien (6) sur lequel il est disposé.
